(19) **Europäisches Patentamt**

**European Patent Office**

**Office européen des brevets**

(11) **EP 1 047 278 A2**

(12) **EUROPEAN PATENT APPLICATION**

(43) Date of publication:
25.10.2000 Bulletin 2000/43

(51) Int. Cl.7: **H04Q 7/36**

(21) Application number: **00303258.8**

(22) Date of filing: **18.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.04.1999 US 298035**

(71) Applicant:
**LUCENT TECHNOLOGIES INC.**
**Murray Hill, New Jersey 07974-0636 (US)**

(72) Inventors:
• **Gandhi, Asfi Dawoodi**
  **Summit, New Jersey 07901 (US)**
• **Nardozza, Gregg Scott**
  **Glenwood, New Jersey 07418 (US)**

(74) Representative:
**Buckley, Christopher Simon Thirsk et al**
**Lucent Technologies Inc.,**
**5 Mornington Road**
**Woodford Green, Essex IG8 0TU (GB)**

(54) **Pseudo-random frequency assignment**

(57) In a communications system including a plurality of base stations, each of which is employed to communicate with a corresponding geographic sector, a method of assigning N transmission channels, each channel having a corresponding channel number, to be used by the plurality of base stations. In the method, a set of N random numbers is generated. Each random number corresponds to a channel number. The set of random numbers is partitioned into a plurality of sectors, each of the sectors corresponding to a geographic region serviced by one of the plurality of base stations. Based upon the partitioned set of random numbers, corresponding channels are assigned for use by each one of the base stations. According to one embodiment, two channel numbers in the same sector are separated into different sectors if the difference between the two channels numbers is equal to or less than a predetermined number. When the predetermined number is one, two consecutive channel numbers are separated.

*FIG. 2A*

SEVEN CELL CLUSTER 4

SEVEN CELL CLUSTER 5

MEAN RE-USE DISTANCE

REPEAT CELL

LETTERS INDICATE FREQUENCY SET USED IN A CELL

Printed by Xerox (UK) Business Services
2.16.7 (HRS)/3.6

## Description

## Field Of The Invention

This invention relates generally to wireless communication systems, and more particularly to a method of assigning wireless communication channels having frequencies to a plurality of wireless transmissions.

## Background Of The Invention

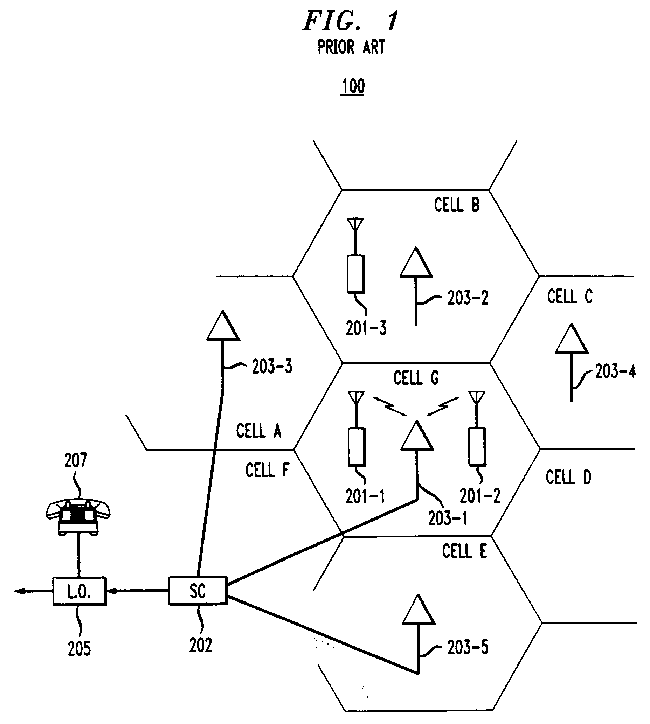

Figure 1 illustrates a typical wireless telecommunications system. Switching center 202 is connected to a plurality of base stations, such as those depicted by base stations 203-1 through 203-5. Additionally, switching center 202 is connected to local or long-distance telephone offices (not shown). Wireless terminals, such as those depicted by terminals 201-1 through 201-3, communicate with a base station which is located in the same pre-determined geographic area, or cell, as itself. For instance, wireless terminals 201-1 and 201-2 are located in cell G, they therefore communicate with base station 203-1, which is located in and services cell G.

In order for wireless terminal 201-1 to communicate, it sends a signal via radio waves to base station 203-1; base station 203-1 relays the received signal to switching center 202; and, switching center 202, according to instructions supplied as part of the signal, relays the signal elsewhere. If the desired destination of the signal is another wireless terminal, then switching center 202 relays the signal to a base station located in the same cell as the wireless terminal intended to receive the signal, and the base station transmits the signal via radio waves to the wireless terminal. Likewise, if the desired destination of the signal is a wireline terminal, such as wireline terminal 207, then switching center 202 relays the signal to the desired destination via wirelines to the local or long-distance networks.

In a wireless communications system, a methodology referred to as channel assignment is utilized to permit simultaneous radio transmissions between a base station and a plurality of wireless terminals. Communication data is sent and received on carrier signals having carrier frequencies. Each carrier frequency defines a channel with a given communications bandwidth. Under a channel assignment plan, a plurality of carrier frequencies are assigned to each base station. In a first channel assignment plan, each base station is assigned a particular set of carrier frequencies. In a dynamic channel assignment plan, the carrier frequencies are assigned to base staions on an as-needed basis. Each base station within a cell transmits the communication signals by employing its assigned group of carrier frequencies. In some instances, each cell is also divided into various sectors --typically three sectors-- such that each sector is assigned a plurality of communication channels. Typically, under the North American AMPS (Advanced Mobile Phone System) allocation scheme, each channel has a frequency bandwidth of 30 kHz. The Federal Communications Commission (hereinafter "FCC") guidelines gives each cellular carrier approximately 12 MHz of bandwidth, and with the typical 30 kHz per channel, each cellular operator has 400 distinct frequency channels.

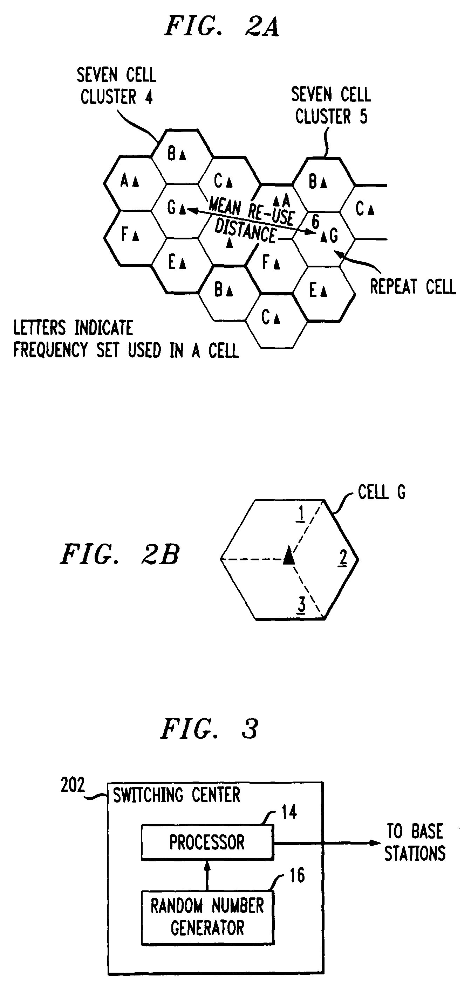

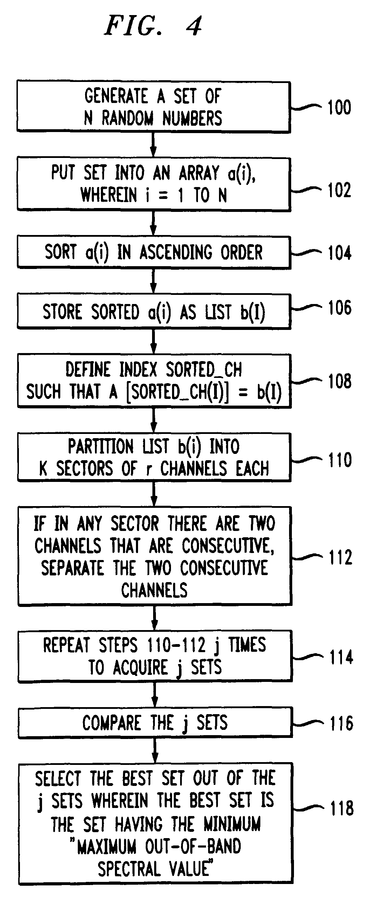

Figure 2(a) illustrates seven-cell cluster 4. As shown, cell G of seven-cell cluster 4 is surrounded by six other cells. In order to minimize interference, each of the seven cells utilizes a set of frequencies different from the frequency set utilized by the other six cells in the cluster. An adjacent seven-cell cluster 5 has the same geometry as seven-cell cluster 4, such that a cell using the frequency set G is surrounded by six other cells utilizing frequency sets A through F. Mean re-use distance $D$ is the distance between two cells, in adjacent seven-cell clusters, that utilize the same frequency set. This distance is typically sufficiently large enough so that a call transmitted on a specified frequency from one cell will cause an acceptable level of interference to calls transmitted on the same frequency in another cell. It is noted, however, that the hexagonal shape of the cells illustrated in the figures merely approximates the region serviced by a wireless transmitter, and that the shape of an actual cell is dependent upon factors such as the geography or topography of the region. It is also noted that, although seven-cell clusters are shown, a wireless system may employ clusters comprising any number of cells (e.g.-four- or twelve-cell clusters).

Figure 2(b) illustrates the arrangement wherein each cell is typically divided into three sectors. Each sector of a cell employs different frequencies than the remaining two sectors of the cell. Thus, in a seven-cell cluster having three sectors per cell, there are typically 21 different sectors, each of which employs a frequency set different from that of any other sector. Since there are typically 400 available channels, each sector is typically assigned 19 different frequencies over which calls from that sector may be transmitted. It is noted that channels 1 through 400 each have the same bandwidth and as such are equally spaced.

According to the typical prior art frequency assignment scheme, beginning from channel 1, the channels are sequentially assigned at a predetermined order. Thus, for example, channels 1, 22, 43, 64, 85, etc. are assigned to the first sector of the first cell in a seven-cell cluster. Similarly, channels 2, 23, 44, 65, 86, etc are assigned to the second sector of the first cell in the seven-cell cluster and so on.

However, assigning channels in this manner may result in out-of-band spectral emissions. As mentioned above, the FCC guidelines allow each wireless service provider to operate within a pre-assigned spectrum bandwidth. Signals outside of a provider's pre-assigned spectrum bandwidth are out-of-band spectral emissions for the service provider. The FCC puts very strict limits on any out-of band spectral emission. An amplifier of a base station that transmits signals that are assigned in a systematic, equally-spaced manner causes peak out-of-band spectral emissions that are undesirably high. Thus in order to avoid any unauthorized emission, many service providers operate the base station amplifiers at less than optimum capacity, which results in reduced efficiency. Furthermore, the service providers also employ voltage-clipping techniques so that the peak amplitude of any out-of-band emission remains below a prescribed guideline. Such voltage-clipping techniques may cause base station amplifiers and related lines to exhibit non-linear characteristics and signal distortions. In order to eliminate such signal distortions, base stations need to employ additional filtering arrangements such as inverse or ITR filters. Such filters may contribute to manufacturing costs and to the complexity of the amplifiers used in the base stations.

Therefore, there exists a need for a method for assigning channels in a wireless communications system that substantially alleviates out-of-band spectral emissions without sacrificing amplifier efficiency and/or causing signal distortions.

## Summary Of The Invention

The present invention is a method for assigning channels in a wireless communications system that substantially alleviates out-of-band spectral emissions without sacrificing amplifier efficiency and/or causing signal distortions. In accordance with one embodiment, the present invention provides a method of assigning N transmission channels to be used by a plurality of base stations. In the method, a set of N random numbers is generated, wherein each of the random numbers corresponds to a channel number. The set of random numbers is partitioned into a plurality of sectors, each of the sectors corresponding to a geographic region serviced by one of the plurality of base stations. The partitioned set of random numbers is employed to assign corresponding channels for use by each one of the base stations. According to one embodiment, two channel numbers in the same sector are separated into different sectors if the difference between the two channels numbers is equal to or less than a predetermined number. When the predetermined number is equal to one, two channels that are consecutive are separated.

According to another embodiment, the steps are repeated $j$ times, in order to acquire $j$ sets, each set consisting of k sectors (wherein k is the number of sectors in a cluster) of r channels (wherein r is the number of channels that may be assigned to a particular sector, i.e. - r=N/k ), and the maximum out-of-band spectral value of each of the $j$ sets is computed. The $j$ sets are compared and the set having the minimum maximum out-of-band spectral value out of all of the $j$ sets is selected.

In accordance with another embodiment, the present invention provides a method for separating two channel numbers in a sector whose difference is equal to 1. According to one method, two consecutive channels that belong to a same sector are designated as channel $s$ and channel $s+1$. Channel $s+1$ is interchanged with channel $s+2$ if channel $s-2$ belongs to the same sector as channel $s$, and channel $s$ is interchanged with channel $s-1$ if channel $s-2$ does not belong to the same sector as channel $s$. The method repeats these steps until no two consecutive channels belong to a same sector.

## Brief Description Of The Drawings

The present invention will be further understood from the following description with reference to the accompanying drawings, in which:

Figure 1 illustrates a typical wireless telecommunications system, in accordance with the prior art;

Figure 2(a) illustrates a seven-cell cluster of wireless transmission regions, as employed in one embodiment of the present invention;

Figure 2(b) illustrates a wireless communication cell divided into three sectors, as employed in one embodiment of the present invention;

Figure 3 illustrates some of the components of a wireless communication system, as employed in one embodiment of the present invention;

Figure 4 is a flowchart that illustrates the steps performed by the present invention, according to one embodiment;

Figure 5 is a flow chart that illustrates the steps performed to separate two consecutive channels in a sector, in accordance with one embodiment of the present invention;

Figure 6 is a flow chart that illustrates the steps performed to compare frequency channel assignments using different sets of generated random numbers, in accordance with one embodiment of the invention;

Figure 7 is a graph that illustrates the peak out-of-band values for a given set of random phases, in accordance with the prior art;

Figure 8 is a graph that illustrates the peak out-of-band spectral values for 200 different random frequency assignments over all phase sets and all sectors, in accordance with one embodiment of the present invention;

Figure 9 is a graph that shows the results of randomly varying the phase set assignments, in accordance with one embodiment of the present invention;

Figure 10 is a graph that illustrates peak out-of-band spectral values experienced in 21 sectors over different phase settings, in accordance with one embodiment of the present invention; and

Figure 11 is a table that shows an assignment of wireless communication channels, according to one embodiment of the invention.

## Detailed Description Of The Invention

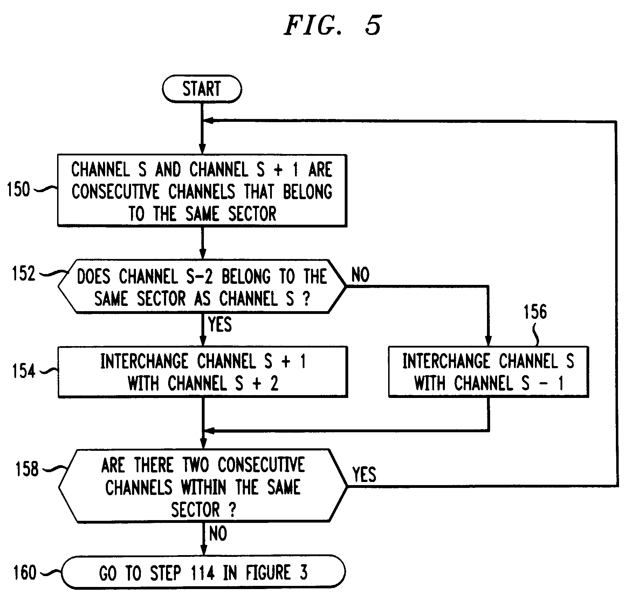

The present invention, in accordance with one embodiment, provides a method for assigning frequency channels to be used by a plurality of base stations to transmit wireless messages. Figure 3 illustrates some of the components of a switching center 202 in accordance with one embodiment of the present invention. As shown processor 14 is configured to control the operation of the switching center. Specifically, processor 14 includes output terminals that are coupled to each one of the base stations employed in the system. Each of these output terminals provide the channel assignments of each base station in accordance with the principles of the present invention.

Processor 14 is also coupled to random number generator 16, which generates random numbers corresponding to the channels available within the frequency spectrum assigned to the wireless service provider. The operation of the random number generator is described in more detail below. It is noted that although in Fig. 3 a random number generator is illustrated separately from processor 14, the invention is not limited in scope in that respect. For example, processor 14 may be configured to generate random numbers in accordance with various known random number generating schemes. Furthermore, a computer may be employed to generate the channel assignments in accordance with the present invention.

Figure 4 is a flowchart that illustrates the steps performed by the present invention to assign frequency channels, according to one embodiment of the invention. At step 100, random number generator 16 generates a set of N random numbers between 0 and 1. Random number generator 16, may be configured to generate random numbers in various different ways, such as those described in Donald E. Knuth, The Art of Computer Programming, *Stanford University* (Second Edition), which is incorporated herein by reference as fully as if set forth in its entirety.

For instance, in accordance with one embodiment of the invention, random number generator 16 generates random numbers according to the linear congruential method. In the linear congruential method, random number generator 16 employs the following variables:

$$m, \text{ the modulus;} \qquad m>0;$$

$$a, \text{ the multiplier;} \qquad 0 \leq a < m;$$

$$c, \text{ the increment;} \qquad 0 \leq c < m;$$

$$X_0, \text{ the starting value;} \qquad 0 \leq X_0 < m;$$

and generates the desired sequence of random numbers $X_n$ by setting:

$$X_{n+1} = (aX_n + c) \bmod m, \qquad n \geq 0.$$

In another embodiment of the invention, random number generator 16 generates random numbers according to the quadratic congruential method. According to the quadratic congruential method, the desired sequence of random numbers $X_n$ is generated, generally, by setting:

$$X_{n+1} = (dX_n^2 + aX_n + c) \bmod m, \qquad n \geq 0;$$

wherein $m$, X, $a$, and $c$ are defined as above and $d$ is an integer. However, the present invention is not limited in scope by the manner in which the random numbers are generated by random number generator 16.

Returning to Figure 4, at step 102, processor 14 stores the set of N random numbers into an array a(i), wherein i=1 to N. At step 104, processor 14 sorts array a(i) in ascending order according to the value of the generated random numbers and at step 106, stores the sorted array a(i) as list b(l). At step 108, processor 14 defines index "sorted_ch(l)" such that a[sorted_ch(l)] = b(l) . At step 110, sorted_ch(l) is then partitioned into K sectors, each sector having r channel numbers, wherein r=N/K . Thus, after step 110, a first group of r channel numbers belongs to the first sector (i.e. - sector 1 is sorted_ch(1) to sorted_ch(r)), a next group of r channel numbers belongs to the second sector (i.e.- sector 2 is sorted_ch(r+1) to sorted_ch(2r)), etc. Preferably, processor 14 partitions 400 available channel numbers into 21 sectors, each sector configured to employ 19 carrier frequencies corresponding to 19 channels, for a total of 399 employed channels. Also, in the preferred embodiment, the 21 sectors correspond to seven different base stations, each base station servicing a geographic region or cell comprising three sectors.

At step 112, processor 14 determines whether, in any sector, there are two channel numbers whose difference is equal to or less than a predetermined number $n$, wherein $n$ is any positive integer. According to one embodiment, $n=1$, such that processor 14 determines whether, in any sector, there are two channel numbers that are consecutive. If so, the two channel numbers are separated into different sectors. The separation of the two channel numbers is performed, according to one embodiment of the present invention, by performing the steps as illustrated in the flowchart of Figure 5, as will be explained in greater detail below.

It is noted that in accordance with another embodiment of the invention, instead of obtaining a set of N random numbers between 0 and 1, and sorting them in an ascending order as describe above, a set of N pseudo-random numbers between 1 and 400 is generated (the set is pseudo-random because generated numbers are not repeated) such that each random number corresponds to a separate channel number. Thereafter, the generated set of random numbers are divided into a corresponding number of sectors as described above.

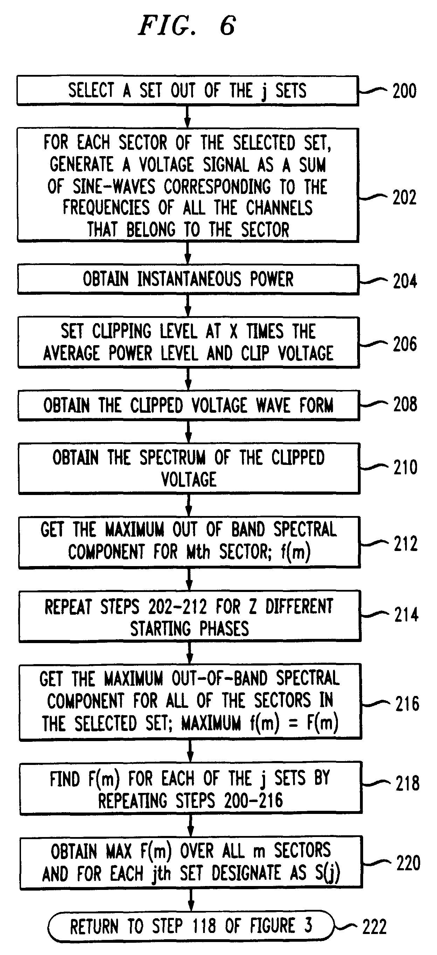

At step 114, processor 14 repeats steps 100 through 112 $j$ times, in order to acquire $j$ sets of channel number assignments. At step 116, the $j$ sets are compared, by performing the steps as illustrated in the flow chart of Figure 6, as will be explained in greater detail below. Finally, at step 118, processor 14 selects the best set of the $j$ sets. According to one embodiment of the invention, the best set out of the $j$ sets is the set having the minimum "maximum out-of-band spectral value", wherein the "maximum out-of-band spectral value" is a value corresponding to the greatest out-of-band spectral emission which is experienced in each of the sets. Wireless transmissions in a asector are transmitted on one of the frequency channels that are assigned to that sector.

It is noted that the present invention is not limited in scope by the quantitative measure of randomness of the numbers generated by random number generator 16. Generally, any measure of randomness that has been or will be conceived is intended to be covered herein. For instance, any set of random numbers generated by random number generator 16 is contemplated that satisfies the chi-square statistical test, the Kolmogorov-Smirnov test, the equidistribution test, the serial test, the gap test, the poker test, the coupon collector's test, the permutation test, the run test, the serial correlation test, etc. all of which are described in the Knuth reference.

Furthermore, it is contemplated that any degree of substantial randomness may be satisfactory, as long as the out-of band spectral value produced does not exceed a predetermined threshold value. Thus, the present invention contemplates hand-picking numbers, or any other means of selecting numbers, provided that the out-of-band spectral value produced does not exceed the predetermined threshold value. In accordance with one embodiment, a degree of substantial randomness is satisfactory, as long as the out-of-band spectral value produced is equal to or less than the out-of-band spectral value produced by an equally-spaced assignment of channels.

Figure 5 is a flow chart that illustrates the steps performed, in accordance with one embodiment of the invention, in order to separate two consecutive (i.e.- $n$=1) channel numbers in a sector, such as described in step 112 of the flow chart in Figure 4. At step 150, processor 14 designates two consecutive channel numbers that belong to the same sector as channel $s$ and channel $s+1$. At step 152, processor 14 determines whether channel $s$-2 belongs to the same sector as channel $s$. If channel $s$-2 does belong to the same sector as channel $s$, then processor 14 proceeds to step 154. At step 154, processor 14 interchanges channel $s+1$ with channel $s+2$. If channel $s$-2 does not belong to the same sector as channel $s$, then processor 14 proceeds to step 156. At step 156, processor 14 interchanges channel $s$ with channel $s$-1.

At the completion of either step 154 or 156, processor 14 proceeds to step 158. At step 158, processor 14 again determines whether there are two consecutive channels within the same sector. If there are two consecutive channels within the same sector, then processor 14 returns to step 150, and repeats the previously described steps. If there are no two consecutive channels within the same sector, then processor 14 proceeds to step 160, which returns processor 14 to step 114 of the flow chart in Figure 4. As previously stated, channels that are not consecutive but are spaced at an interval $n$>1, can also be separated if desired. For instance, according to one embodiment wherein $n$=3, steps similar to those shown in the flow chart of Figure 5 are performed if channel index numbers 8 and 10 are in the same sector.

Figure 6 is a flow chart that illustrates the steps performed, in accordance with one embodiment of the invention, to compare the $j$ sets, such as described in step 116 of the flow chart in Figure 4. At step 200, a set of the $j$ sets is selected. At step 202, for each sector of the selected set, processor 14 generates a voltage signal that consists of the sum of sine-waves corresponding to the frequencies of all of the channels that belong to that sector.

At step 204, processor 14 obtains the instantaneous power from the voltage signals. At step 206, processor 14 sets a clipping level at an instantaneous power level corresponding to $x$ times the average power level, and clips the voltage at this level. According to the preferred embodiment of the invention, $x$=8. At step 208, processor 14 obtains the clipped voltage waveform. At step 210, processor 14 obtains the spectrum of the clipped voltage.

At step 212, for an $m$-th sector, processor 14 determines the maximum out-of-band spectral component. The maximum out-of-band spectral component for an $m$-th sector is designated as $f(m)$.

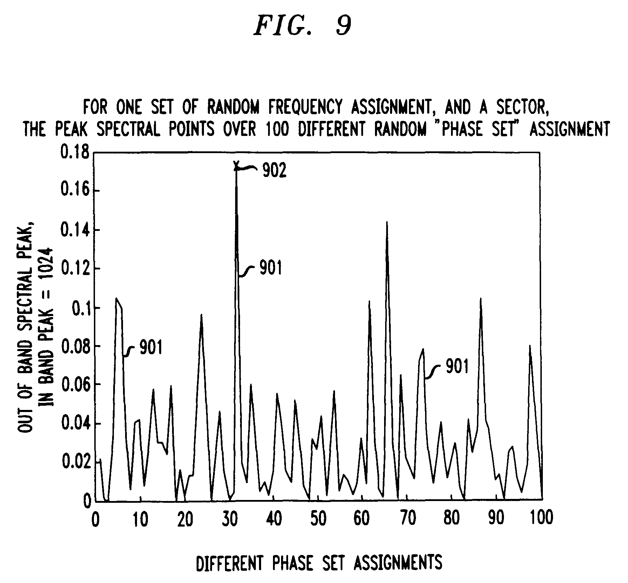

At step 214, processor 14 repeats steps 202 through 212 for a plurality of different starting phases. Figure 9 is a graph that shows the results of randomly varying the phase set assignments. Specifically, graph line 901 shows peak out-of-band spectral values for one set of random frequency assignments over 100 different random phase set assignments in one sector. Graph point 902 shows a maximum out-of-band spectral value for the sector.

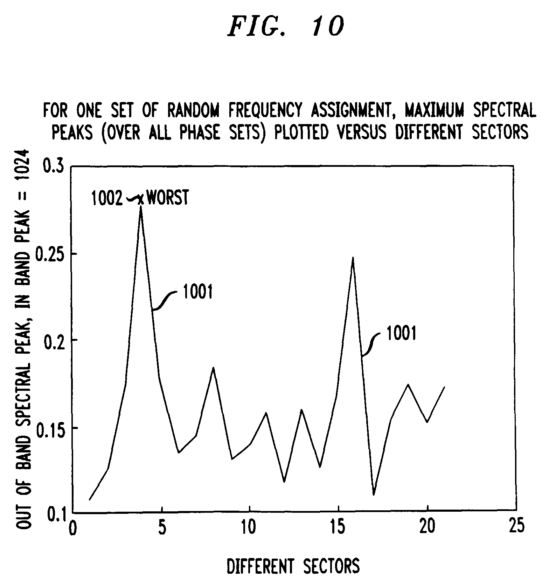

In addition, Figure 10 is a graph that illustrates the peak out-of-band spectral values experienced in each of 21 sectors over all of the different phase settings for a set of randomly generated frequency assignments. Graph line 1001 shows the peak out-of-band spectral values across the 21 sectors (the value at one of the sectors corresponds to graph point 902 of Figure 9). Graph point 1002 correponds to the maximum out-of-band spectral value for all of the 21 sectors.

Returning to the flowchart of Figure 6, at step 216, processor 14 determines the maximum out-of-band spectral component for all of the sectors in the selected set. The maximum out-of-band spectral component for all of the sectors in the selected set is the maximum $f(m)$ value, which is also designated as $F(m)$.

At step 218, processor 14 determines the value of $F(m)$ for each of the $j$ sets by repeating steps 200 through 216. At step 220, processor 14 obtains the maximum value of $F(m)$ over all the m sectors and for each $j^{th}$ set denotes this value as $S(j)$, which is referred to as the maximum out-of-band spectral value for the $j^{th}$ set. At step 222 processor 14 returns to step 118 of the flow chart in Figure 4 and selects the best channel assignment set that has the minimum $S(j)$ over all the "j" sets. Thus the channel assignment scheme that causes the least amount of out-of-band spectral emission is selected.

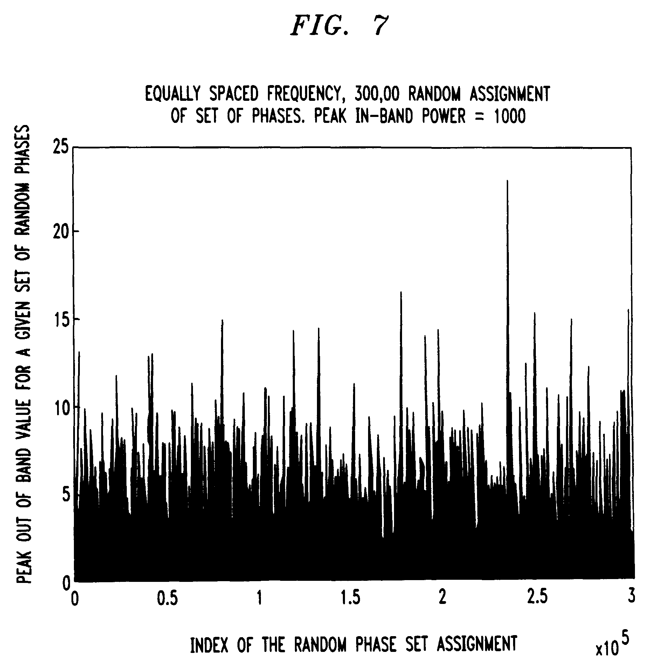

The benefits of the method of the present invention, according to one embodiment of the present invention, are demonstrated with reference to Figures 7 through 8. In accordance with the prior art, Figure 7 shows the peak out-of-band values for a given set of random phases for a method of selecting channels having equally-spaced frequencies. As shown, the peak out-of-band value is 23.263.

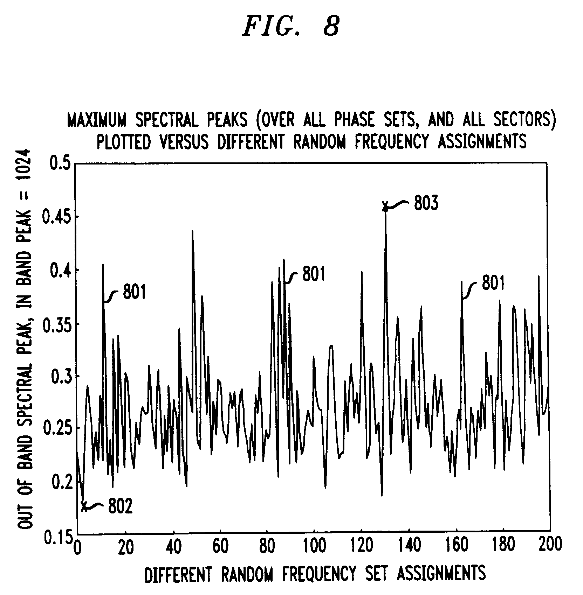

By contrast, Figure 8 is a graph that illustrates the peak out-of-band spectral values for 200 different random frequency assignments over all phase sets and all sectors. As shown by point 802, the best result is a peak out-of-band spectral value of 0.18. More significantly, the worst result is a peak out-of-band spectral value of approximately 0.45. In comparison to the worst case peak out-of-band value of 23.263, obtained when equally-spaced frequencies are employed, the worst peak out-of-band value when random frequency assignments are made has approximately 50 times less power.

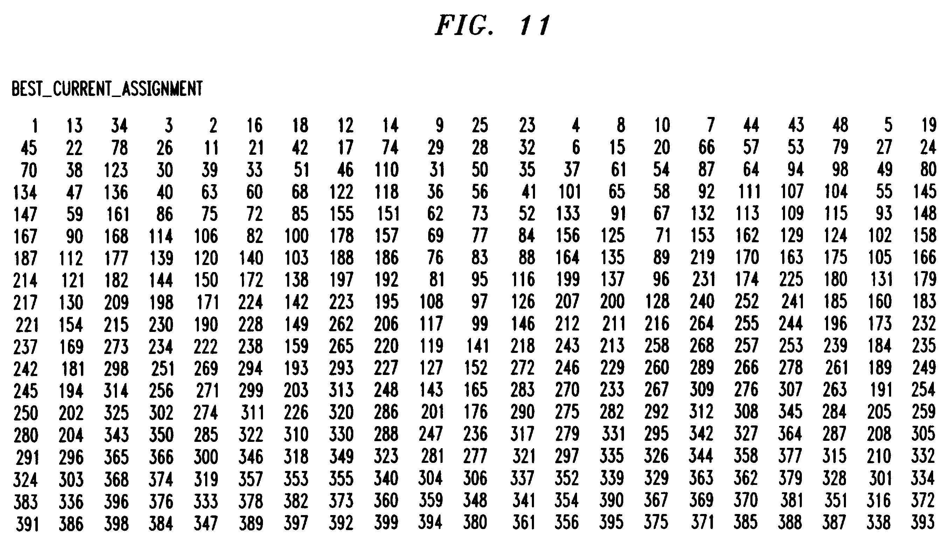

Figure 11 is a table that shows an example of how wireless communication channels may be assigned, according to one embodiment of the invention. In the figure, there are 21 sectors, each sector represented by a column, having 19 carrier frequencies assigned thereto. Thus, in the first sector (i.e. - the first column), a first base station assigns carrier frequency 1 to a first wireless transmission, carrier frequency 45 to a second wireless transmission, carrier frequency 70 to a third wireless transmission, etc. This set corresponds to point 802 of Figure 8.

Reducing the peak out-of-band spectral value allows the amplifier of a wireless base station to operate at significantly less power than it otherwise could, so as to avoid exceeding FCC limits placed on the system. Furthermore, it permits the amplifier be sized much smaller than would typically be required.

While there has been shown and described particular embodiments of the invention, it will be obvious to those skilled in the art that changes and modifications can be made therein without departing from the invention, and therefore, the appended claims shall be understood to cover all such changes and modifications as fall within the true spirit and scope of the invention.

## Claims

1. In a communications system including a plurality of base stations, a method of assigning N transmission channels, each channel having a corresponding channel number, to be used by said plurality of base stations, said method comprising the steps of:

    (a) generating a set of N random numbers, each said random number corresponding to a channel number;

    (b) partitioning said set of random numbers into a plurality of sectors, each said sector corresponding to a geographic region serviced by one of said plurality of base stations; and

    (c) assigning, based upon said partitioned set of random numbers, corresponding channels to each one of said base stations.

2. The method according to claim 1, further comprising the steps of

    determining whether, in any sector, there are two channel numbers whose difference is equal to or less than a predetermined number $n$; and

    if so, separating said two channel numbers into different sectors.

3. The method according to claim 2, wherein $n=1$, such that said method comprises the step of separating into different sectors two channel numbers that are consecutive.

4. The method according to claim 2, wherein said separating step further comprises:

(a) designating two consecutive channels that belong to a same sector as channel *s* and channel *s+1*;

(b) determining whether channel *s-2* belongs to the same sector as channel *s*, and interchanging channel *s+1* with channel *s+2* if said channel *s-2* does belong to said same sector as channel *s*, and interchanging channel *s* with channel *s-1* if channel *s-2* does not belong to said same sector as channel *s*;
repeating steps (a) and (b), until no two consecutive channels belong to a same sector.

5. The method according to claim 1, further comprising the steps of:

repeating steps (a) to (c) *j* times, in order to acquire *j* sets, each of said *j* sets having a corresponding maximum out-of band spectral value;

comparing said *j* sets;

selecting a set of said *j* sets having a minimum maximum out-of-band spectral value.

6. The method according to claim 5, wherein said comparing step further comprises:

selecting a set from said *j* sets;

for each said sector of said selected set, generating a voltage signal corresponding to a sum of single tones of all of said channels that belong to said sector;

obtaining an instantaneous power level;

setting a clipping level at *x* times an average power level and clipping said voltage at said clipping level;

obtaining a waveform corresponding to said clipped voltage;

obtaining a spectrum corresponding to said clipped voltage waveform;

determining said maximum out-of-band spectral component for each of said sectors at a plurality of different starting phases; and

determining said maximum out-of-band spectral component for all of said sectors in said selected set.

7. The method according to claim 6, wherein *x*=8.

8. The method according to claim 1, wherein N = 399 channels; and said partitioning step further comprises partitioning said 399 channels into 21 sectors, each said sector having 19 frequencies.

9. The method according to claim 1, wherein after said generating step, said method comprises the following steps:

storing said set of N random numbers into an array a(i), wherein i= 1 to N;

sorting array a(i) in ascending order according to the value of said generated random numbers;

storing said sorted array a(i) as list b(l);

defining index "sorted_ch(l)" such that a[sorted_ch(l)] = b(l) ; and

partitioning said index "sorted_ch(l)" into said plurality of sectors.

10. In a communications system including a plurality of base stations, a method of assigning N transmission channels, each channel having a corresponding channel number, to be used by said plurality of base stations, said method comprising the steps of:

(a) generating a set of N substantially random numbers, each said substantially random number corresponding to a channel number;

(b) partitioning said set of substantially random numbers into a plurality of sectors, each said sector corresponding to a geographic region serviced by one of said plurality of base stations; and

(c) assigning, based upon said partitioned set of substantially random numbers, corresponding channels for each one of said base stations, such that an out-of-band spectral value produced by said corresponding channel assignment is equal to or less than a predetermined threshold value,

11. The method according to claim 10, wherein said set of N substantially random numbers produces an out-of-band spectral value that is equal to or less than the out-of-band spectral value produced by an equally-spaced assignment of channels.

12. An apparatus for assigning N frequency channels for use by a plurality of base stations configured to transmit wireless messages, said apparatus comprising:

a random number generator configured to generate a set of N random numbers, each said random number corresponding to a channel; and

a processor coupled to said random number generator and configured to partition said set of random numbers into a plurality of sectors, each said sector corresponding to a geographic region serviced by one of said plurality of base stations, said processor further configured to assign, based upon said partitioned set of random numbers, corresponding channels for each one of said base stations.

13. The apparatus according to claim 12, wherein said processor is further configured to transmit said wireless messages over said assigned frequency channels.

14. The apparatus according to claim 12, wherein said processor is further configured to determine whether, in any sector, there are two channel numbers whose difference is equal to or less than a predetermined number $n$, and if so, to separate said two channel numbers into different sectors.

15. The apparatus according to claim 14, wherein $n=1$, such that said processor is configured to separate into different sectors two channel numbers that are consecutive.

16. The apparatus according to claim 14, wherein said processor is further configured to separate said two consecutive channels by:

(a) designating two consecutive channels that belong to a same sector as channel $s$ and channel $s+1$;

(b) determining whether channel $s-2$ belongs to the same sector as channel $s$, and interchanging channel $s+1$ with channel $s+2$ if said channel $s-2$ does belong to said same sector as channel $s$, and interchanging channel $s$ with channel $s-1$ if channel $s-2$ does not belong to said same sector as channel $s$;
repeating steps (a) and (b), until no two consecutive channels belong to a same sector.

17. The apparatus according to claim 12, wherein said processor is further configured to;

repeat steps (a) to (c) $j$ times, in order to acquire $j$ sets, each of said $j$ sets having a corresponding maximum out-of-band spectral value,

compare said $j$ sets;

select a set of said $j$ sets having a minimum maximum out-of-band spectral value.

18. The apparatus according to claim 17, wherein said processor is further configured to compare said sets by:

selecting a set from said $j$ sets;

for each said sector of said selected set, generating a voltage signal corresponding to a sum of single tones of all of said channels that belong to said sector;

obtaining an instantaneous power level;

setting a clipping level at $x$ times an average power level and clipping said voltage at said clipped level;

obtaining a waveform corresponding to said clipped voltage;

obtaining a spectrum corresponding to said clipped voltage waveform;

determining said maximum out-of-band spectral component for each of said sectors at a plurality of different starting phases;

determining said maximum out-of-band spectral component for all of said sectors in said selected set.

19. The apparatus according to claim 18, wherein $x=8$.

20. The apparatus according to claim 12, wherein N = 399 channels; and said processor is further configured to partition said 399 channels into 21 sectors, each said sector having 19 frequencies.

21. The apparatus according to claim 12, wherein said processor is further configured to:

store said set of N random numbers into an array a(i), wherein i=1 to N;

sort array a(i) in ascending order according to the value of said generated random numbers;

store said sorted array a(i) as list b(l);

define index "sorted_ch(l)" such that a[sorted_ch(l)] = b(l) ; and

partition said index "sorted_ch(l)" into said plu-

rality of sectors.

**22.** An apparatus for assigning N frequency channels for use by a plurality of base stations configured to transmit wireless messages, said apparatus comprising:

a random number generator configured to generate a set of N substantially random numbers, each said substantially random number corresponding to a channel; and

a processor coupled to said random number generator and configured to partition said set of substantially random numbers into a plurality of sectors, each said sector corresponding to a geographic region serviced by one of said plurality of base stations, said processor further configured to assign said partitioned set of substantially random numbers as a corresponding channel assignment for each one of said base stations such that an out-of-band spectral value produced with said set of numbers does not exceed a predetermined threshold value.

**23.** The apparatus according to claim 22, wherein said set of N substantially random numbers produces an out-of-band spectral value that is equal to or less than the out-of-band spectral value produced by an equally-spaced assignment of channels.

*FIG. 1*
PRIOR ART

<u>100</u>

## FIG. 2A

SEVEN CELL
CLUSTER 4

SEVEN CELL
CLUSTER 5

MEAN RE-USE DISTANCE

REPEAT CELL

LETTERS INDICATE
FREQUENCY SET USED IN A CELL

## FIG. 2B

CELL G

## FIG. 3

202

SWITCHING CENTER

PROCESSOR — 14

TO BASE
STATIONS

RANDOM NUMBER
GENERATOR — 16

# FIG. 4

```
┌─────────────────────────────┐
│      GENERATE A SET OF       │——— 100
│      N RANDOM NUMBERS        │
└─────────────────────────────┘
              ↓
┌─────────────────────────────┐
│   PUT SET INTO AN ARRAY a(i),│——— 102
│     WHEREIN i = 1 TO N       │
└─────────────────────────────┘
              ↓
┌─────────────────────────────┐
│   SORT a(i) IN ASCENDING ORDER │——— 104
└─────────────────────────────┘
              ↓
┌─────────────────────────────┐
│   STORE SORTED a(i) AS LIST b(I) │——— 106
└─────────────────────────────┘
              ↓
┌─────────────────────────────┐
│     DEFINE INDEX SORTED_CH   │——— 108
│ SUCH THAT A [SORTED_CH(I)] = b(I) │
└─────────────────────────────┘
              ↓
┌─────────────────────────────┐
│     PARTITION LIST b(i) INTO │——— 110
│  K SECTORS OF r CHANNELS EACH │
└─────────────────────────────┘
              ↓
┌─────────────────────────────┐
│ IF IN ANY SECTOR THERE ARE TWO │
│ CHANNELS THAT ARE CONSECUTIVE, │——— 112
│ SEPARATE THE TWO CONSECUTIVE │
│          CHANNELS            │
└─────────────────────────────┘
              ↓
┌─────────────────────────────┐
│  REPEAT STEPS 110-112 j TIMES │——— 114
│      TO ACQUIRE j SETS       │
└─────────────────────────────┘
              ↓
┌─────────────────────────────┐
│       COMPARE THE j SETS     │——— 116
└─────────────────────────────┘
              ↓
┌─────────────────────────────┐
│ SELECT THE BEST SET OUT OF THE │
│ j SETS WHEREIN THE BEST SET IS │——— 118
│  THE SET HAVING THE MINIMUM   │
│   "MAXIMUM OUT-OF-BAND        │
│     SPECTRAL VALUE"           │
└─────────────────────────────┘
```

## FIG. 5

```
                    ( START )

  150 ──┐   ┌─────────────────────────────────┐
         └──│ CHANNEL S AND CHANNEL S + 1 ARE │
            │ CONSECUTIVE CHANNELS THAT BELONG│
            │      TO THE SAME SECTOR         │
            └─────────────────────────────────┘

  152 ──┐   ╱─────────────────────────────╲   NO
         └──< DOES CHANNEL S−2 BELONG TO THE >─────────┐
            ╲ SAME SECTOR AS CHANNEL S ?  ╱            │
                        │ YES                          │
                                                  156 ─┤
  154 ──┐   ┌─────────────────────┐   ┌─────────────────────┐
         └──│ INTERCHANGE CHANNEL S + 1│   │ INTERCHANGE CHANNEL S │
            │   WITH CHANNEL S + 2 │   │   WITH CHANNEL S − 1 │
            └─────────────────────┘   └─────────────────────┘

  158 ──┐   ╱─────────────────────────╲   YES
         └──< ARE THERE TWO CONSECUTIVE >─────────────
            │ CHANNELS WITHIN THE SAME │
            ╲      SECTOR ?           ╱
                     │ NO

  160 ──┐   ( GO TO STEP 114 IN FIGURE 3 )
```

## FIG. 6

SELECT A SET OUT OF THE j SETS — 200

FOR EACH SECTOR OF THE SELECTED SET, GENERATE A VOLTAGE SIGNAL AS A SUM OF SINE-WAVES CORRESPONDING TO THE FREQUENCIES OF ALL THE CHANNELS THAT BELONG TO THE SECTOR — 202

OBTAIN INSTANTANEOUS POWER — 204

SET CLIPPING LEVEL AT X TIMES THE AVERAGE POWER LEVEL AND CLIP VOLTAGE — 206

OBTAIN THE CLIPPED VOLTAGE WAVE FORM — 208

OBTAIN THE SPECTRUM OF THE CLIPPED VOLTAGE — 210

GET THE MAXIMUM OUT OF BAND SPECTRAL COMPONENT FOR Mth SECTOR; f(m) — 212

REPEAT STEPS 202-212 FOR Z DIFFERENT STARTING PHASES — 214

GET THE MAXIMUM OUT-OF-BAND SPECTRAL COMPONENT FOR ALL OF THE SECTORS IN THE SELECTED SET; MAXIMUM f(m) = F(m) — 216

FIND F(m) FOR EACH OF THE j SETS BY REPEATING STEPS 200-216 — 218

OBTAIN MAX F(m) OVER ALL m SECTORS AND FOR EACH jth SET DESIGNATE AS S(j) — 220

RETURN TO STEP 118 OF FIGURE 3 — 222

## FIG. 7

EQUALLY SPACED FREQUENCY, 300,00 RANDOM ASSIGNMENT
OF SET OF PHASES. PEAK IN-BAND POWER = 1000

# FIG. 8

MAXIMUM SPECTRAL PEAKS (OVER ALL PHASE SETS, AND ALL SECTORS)
PLOTTED VERSUS DIFFERENT RANDOM FREQUENCY ASSIGNMENTS

## FIG. 9

FOR ONE SET OF RANDOM FREQUENCY ASSIGNMENT, AND A SECTOR,
THE PEAK SPECTRAL POINTS OVER 100 DIFFERENT RANDOM "PHASE SET" ASSIGNMENT

DIFFERENT PHASE SET ASSIGNMENTS

# FIG. 10

FOR ONE SET OF RANDOM FREQUENCY ASSIGNMENT, MAXIMUM SPECTRAL PEAKS (OVER ALL PHASE SETS) PLOTTED VERSUS DIFFERENT SECTORS

*FIG. 11*

BEST_CURRENT_ASSIGNMENT

| 1 | 13 | 34 | 3 | 2 | 16 | 18 | 12 | 14 | 9 | 25 | 23 | 4 | 8 | 10 | 7 | 44 | 43 | 48 | 5 | 19 |
|---|----|----|---|---|----|----|----|----|---|----|----|---|---|----|---|----|----|----|---|----|
| 45 | 22 | 78 | 26 | 11 | 21 | 42 | 17 | 74 | 29 | 28 | 32 | 6 | 15 | 20 | 66 | 57 | 53 | 79 | 27 | 24 |
| 70 | 38 | 123 | 30 | 39 | 33 | 51 | 46 | 110 | 31 | 50 | 35 | 37 | 61 | 54 | 87 | 64 | 94 | 98 | 49 | 80 |
| 134 | 47 | 136 | 40 | 63 | 60 | 68 | 122 | 118 | 36 | 56 | 41 | 101 | 65 | 58 | 92 | 111 | 107 | 104 | 55 | 145 |
| 147 | 59 | 161 | 86 | 75 | 72 | 85 | 155 | 151 | 62 | 73 | 52 | 133 | 91 | 67 | 132 | 113 | 109 | 115 | 93 | 148 |
| 167 | 90 | 168 | 114 | 106 | 82 | 100 | 178 | 157 | 69 | 77 | 84 | 156 | 125 | 71 | 153 | 162 | 129 | 124 | 102 | 158 |
| 187 | 112 | 177 | 139 | 120 | 140 | 103 | 188 | 186 | 76 | 83 | 88 | 164 | 135 | 89 | 219 | 170 | 163 | 175 | 105 | 166 |
| 214 | 121 | 182 | 144 | 150 | 172 | 138 | 197 | 192 | 81 | 95 | 116 | 199 | 137 | 96 | 231 | 174 | 225 | 180 | 131 | 179 |
| 217 | 130 | 209 | 198 | 171 | 224 | 142 | 223 | 195 | 108 | 97 | 126 | 207 | 200 | 128 | 240 | 252 | 241 | 185 | 160 | 183 |
| 221 | 154 | 215 | 230 | 190 | 228 | 149 | 262 | 206 | 117 | 99 | 146 | 212 | 211 | 216 | 264 | 255 | 244 | 196 | 173 | 232 |
| 237 | 169 | 273 | 234 | 222 | 238 | 159 | 265 | 220 | 119 | 141 | 218 | 243 | 213 | 258 | 268 | 257 | 253 | 239 | 184 | 235 |
| 242 | 181 | 298 | 251 | 269 | 294 | 193 | 293 | 227 | 127 | 152 | 272 | 246 | 229 | 260 | 289 | 266 | 278 | 261 | 189 | 249 |
| 245 | 194 | 314 | 256 | 271 | 299 | 203 | 313 | 248 | 143 | 165 | 283 | 270 | 233 | 267 | 309 | 276 | 307 | 263 | 191 | 254 |
| 250 | 202 | 325 | 302 | 274 | 311 | 226 | 320 | 286 | 201 | 176 | 290 | 275 | 282 | 292 | 312 | 308 | 345 | 284 | 205 | 259 |
| 280 | 204 | 343 | 350 | 285 | 322 | 310 | 330 | 288 | 247 | 236 | 317 | 279 | 331 | 295 | 342 | 327 | 364 | 287 | 208 | 305 |
| 291 | 296 | 365 | 366 | 300 | 346 | 318 | 349 | 323 | 281 | 277 | 321 | 297 | 335 | 326 | 344 | 358 | 377 | 315 | 210 | 332 |
| 324 | 303 | 368 | 374 | 319 | 357 | 353 | 355 | 340 | 304 | 306 | 337 | 352 | 339 | 329 | 363 | 362 | 379 | 328 | 301 | 334 |
| 383 | 336 | 396 | 376 | 333 | 378 | 382 | 373 | 360 | 359 | 348 | 341 | 354 | 390 | 367 | 369 | 370 | 381 | 351 | 316 | 372 |
| 391 | 386 | 398 | 384 | 347 | 389 | 397 | 392 | 399 | 394 | 380 | 361 | 356 | 395 | 375 | 371 | 385 | 388 | 387 | 338 | 393 |

EP 1 047 278 A2